Europäisches Patentamt

European Patent Office

Office européen des brevets

(11) Publication number: **0 189 006**
A1

# (12) EUROPEAN PATENT APPLICATION

(21) Application number: 85830006.4

(22) Date of filing: 16.01.85

(51) Int. Cl.⁴: **A 01 G 5/02**, A 41 G 1/02

(43) Date of publication of application: 30.07.86
Bulletin 86/31

(84) Designated Contracting States: **AT BE CH DE FR GB IT LI NL SE**

(71) Applicant: **TECNOMATIC S.p.A., Via Ravigliano, 252, I-64013 Corropoli (TE) (IT)**

(72) Inventor: **Bovara, Mario, Dr., Via Giardino, 4, I-64010 Colonnella (TE) (IT)**

(74) Representative: **Mascioli, Alessandro, Prof.Dr., c/o A.N.D.I. Associazione Nazionale degli Inventori Via Lima, 35, I-00198 Roma (IT)**

(54) **A semi-automatic binder for providing flowers for decoration purposes with a support.**

(57) A binder machine for the preparation of flowers provided with a support for forming crowns, cushions and flower decorations, said machine being provided with a plateau (4) being rotable and removable from which the workman with his right hans, picks up one of the flowers being prepared while with his left hand he picks up one stem from the apposite container and introduces the same into cavity (28) of binder shell (14) performing with his right hand a determined pressure onto starting device (3) so as to start the binding cycle.

0 189 006

"A SEMI-AUTOMATIC BINDER MACHINE FOR THE PREPARATION OF
FLOWERS PROVIDED WITH A SUPPORT FOR THE FORMING OF DECO-
RATIONS"
TECNOMATIC S.p.A.
ITALY

The present invention concerns a semi-automatic flower binding machine that allows to mechanically tie flowers also without a stem to a support by means of an iron wire, said flowers being particularly used for forming flower decorations.

It is well known thatactually cloves and all other flowers traditionally used for realizing crowns, cushions, flower decorations and similar are manually tied, one by one, by means of an iron wire to a long, pointed support that will in turn be inserted into the carrying structure.

Said operation has proved to be slow and complicated and requires the work of specialized hands often working in conditions of urgent need, also in night hours, with considerable uneasiness.

It is the aim of the present invention to realize a machine that will change the purely manual work into a semi-automatic operation that will considerably reduce the working times and increase the efficiency.

The aim is reached by means of the binder machine for the preparation of the flowers, being provided with their stem

- 2 -

or also only with their head, with different supports like a cane, plastic, metal and the like by means of tying with an annealed iron wire starting from the calyx, that will be tightened and that continues along the stem and the relative support.

The machine has also the purpose of strengthen the flowers' stem as the annealed iron wire will be rolled up around the same, whereby said annealed iron wire will be unwound from a coil as well as from a skein.

The workman will work in front of the machine with both hands, standing or sitting down; with his right hand he picks up a flower contained on a rotable and removable plateau of circular shape and being placed at his right side, while with his left hand he picks up a stem from the apposite container and introduces the same into the binder shell performing, with his right hand, a determined pressure onto the starting device so as to start the binding cycle.

The present invention will be described more in detail hereinbelow according to the attached drawings in which two preferred embodiments are shown.

Figures 1 and 2 show, in a scheme and in a partial transparence, a front and a lateral view of a main asynchronous one-phase motor variant, always rotating.

Figures 3 and 4 show, in a scheme and in a partial transparence, the front and lateral view of a direct current motor variant.

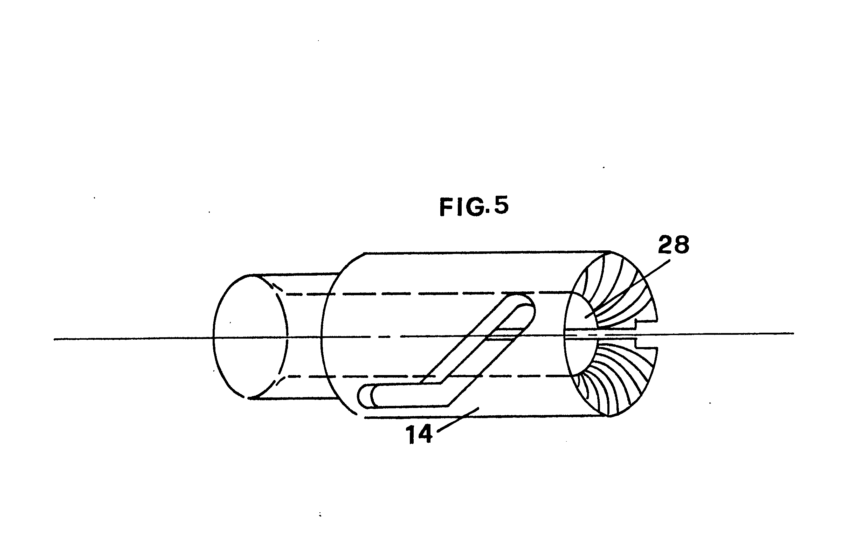

Figure 5 shows a perspective view of the binder shell.

The figures show a binder machine for the preparation of flowers provided with a support for the forming of decorations characterized in the following components:
- a base made of electro-welded iron 12, with a support out of cast iron 15 mounted onto pirouetting wheels 13 and covered with an anti-wear and shockproof paint.

- An unwinding group for annealed iron wire 1, consisting in: a reel with a conveyor 11 and a mouth guide blocking device 10.

- A wire dragging group with elastic rollers 8 operated by a universal joint 9 and an electromagnet 31.

- A shear group with self-sharpening widia blades 7.

- A wire guide, movable in two halves 5, operated by electromagnet 6.

- A binder group consisting in: grooved binder shell with cavity 28, wire guide collar adjusting the binding pitch length 2, operated by pneumatic cylinder 17 provided with a speed regulator 18.

- A cycle starting device 3.

- 4 -

- A register for the wire penetration 30.

- A rotation group consisting in: a main motor 20, an oleodynamic clutch 21, a phase electromagnet 22, a cooling ventilator, a toothed belt 19 and electro-mechanical brakes.

- A pneumatic system consisting in: a silenced air compressor in oil bath 25, an electrovalve for operating cylin - der 23, a two-phase pressure switch with a vacuum pump 24, a reservoir for draining the condensate with draining valve 26.

- An air treatment group consisting in: a filter-reductor-lubrificator.

- An electronic control and operating station with statical functioning 27.

- A main switch 29.

- A circular rotating flower-carrying plateau 4.

- A stem-carrying plateau 16.

- A d.c. electric motor 32.

- A wire dragging motor 33.

- A protection perapex carter 34.

- 5 -

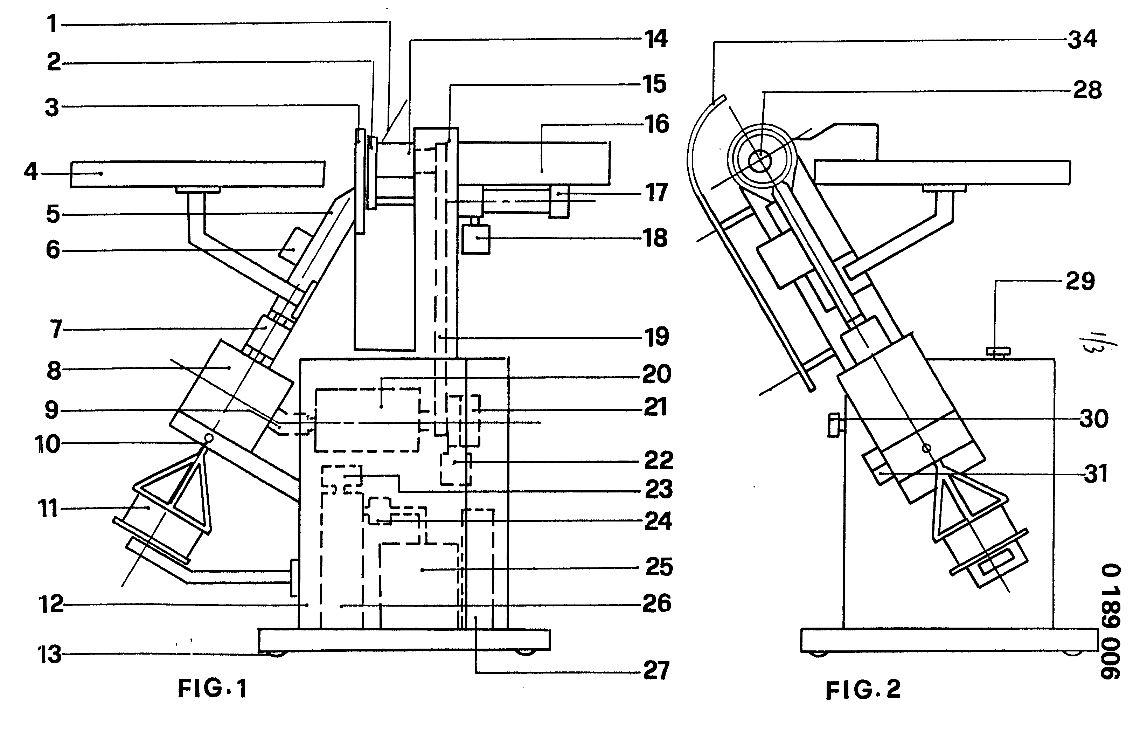

For what concerns the working of the variant according to figures 1 and 2, the working cycle is started by introducing the flower and the stem in grooved shell 14; a light pressure of the right hand onto the cycle starting device 3 makes the machine start.

The opposed rollers of wire dragging 8 blocked by electromagnet 31 cause the high speed advancing of the wire, said wire advancing through the shear and along the movable guide, being closed, until it pierces the calyx of the flower being already placed in the grooved shell.

A precision timer determines the length of the wire and it is adjusted by a wire penetration register 30.

The expiring of the wire advancing time operates the shear that cuts wire 7 and causes the opening of guide 5 and the operating of the phase electromagnet that disengages clutch 21, while belt 19 makes rotate the shell and thus a second cycle begins.

The expiring of the second time cycle makes the guide close again, operates cylinder operating electrovalve 23 that makes advance collar 2 for forming the binding ways.

When the binding is performed, a microswitch of the known kind stops the rotation, makes the collar get back and operates the braking device as well as the phase electromagnet which place again the grooved shell.

- 6 -

The feature of this variant consists in the fact that main motor 20, which is always rotating, operates the ventilator and determines the rotation of dragging rollers 8 (in the pause period they do not drag because they are distanced), and the rotation of oleodynamic clutch 21 (in the pause period it does not turn because it is blocked by phase electromagnet 22). The pneumatic system is always kept under pressure by means of pressure switch 24.

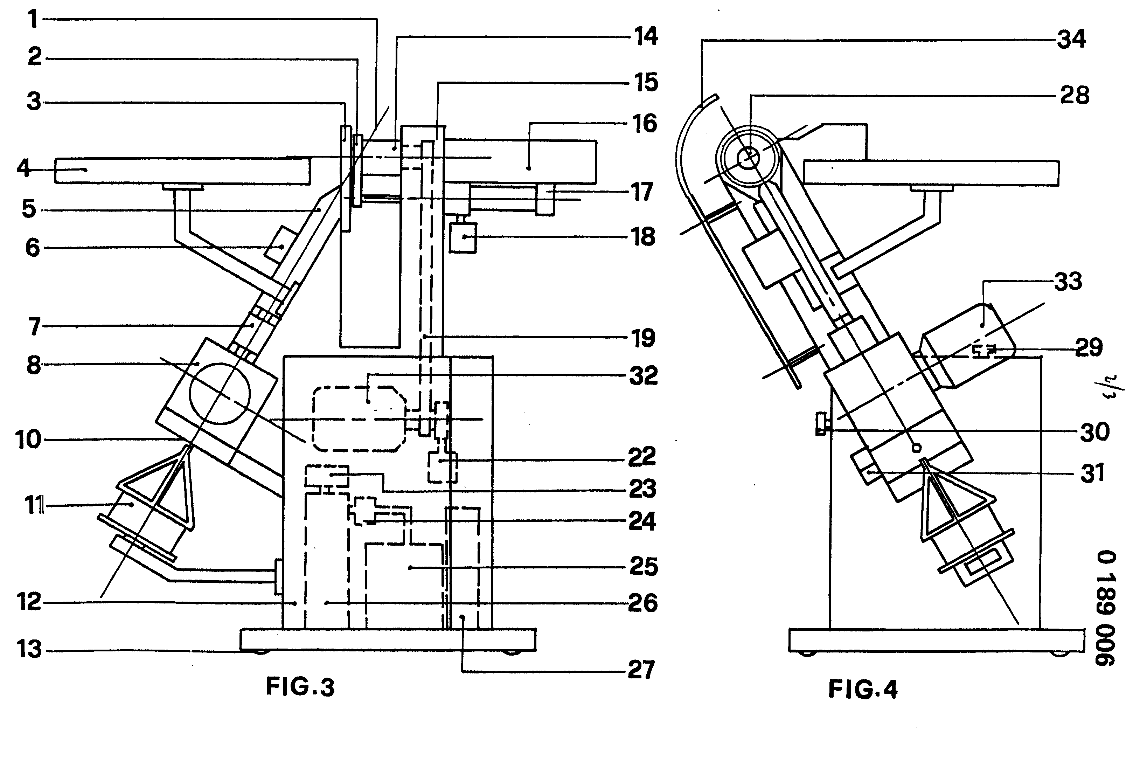

In the variant according to figures 3 and 4 the functioning is the same like above mentioned one, while the operating principle changes.

In the first variant, the main motor is an asynchronous one-phase one and is always rotating and, by means of the universal joint, it causes the rotation of the dragging rollers and of the oleodynamic clutch, while the machine is kept stopped by the same oleodynamic clutch and by a phase electromagnet. On the contrary, in the variant according to figures 3 and 4, motor 32 is in direct current, said motor makes rotate only shell 14 and stops after each cycle with a controlled starting and stopping speed. The dragging rollers are operated by an independent asynchronous one-phase motor that always turns. The operating of the main motor in direct current is statical electronical with acceleration and braking ramp. In said last variant the ventilator as well as the electromechanical brakes are not provided.

CLAIMS

1. A semi-automatic binder machine for the preparation of flowers provided with a support for the forming of decorations, characterized in:

- a base made of electro-welded iron (12), with a support out of cast iron (15) mounted onto pirouetting wheels (13) and covered with an anti-wear and shockproof paint;

- an unwinding group for annealed iron wire (1), consisting in:

   a reel with a conveyor (11)

   a mouth guide blocking device (10);

- a wire dragging group with elastic rollers (8) operated by a universal joint (9) and an electromagnet (31);

- a shear group with self-sharpening widia blades (7);

- a wire guide group, movable in two halves (5), operated by electromagnet (6);

-a binder group consisting in:

   a grooved binder shell (14) with cavity (28) wire guide collar adjusting the binding pitch length (2), operated by pneumatic cylinder (17) provided with a speed regulator (18);

- a cycle starting device (3);

- a register for the wire penetration (30);

- a rotation group consisting in:

   a main motor (20)

   an oleodynamic clutch (21)

a phase electromagnet (22)

a cooling ventilator

a toothed belt (19)

electro-mechanical brakes;

- a pneumatic system consisting in:

a silenced air compressor in oil bath (25)

an electrovalve for operating cylinder (23)

a two-phase pressure-switch with a vacuum pump (24)

a reservoir for draining the condensate with draining valve (26);

- an air treatment group consisting in:

filter-reductor-lubrificator;

- an electronic control and operating station with statical functioning (27);

- a main switch (29);

- a circular rotating flower-carrying plateau (4);

- a stem-carrying plateau (16);

- a d.c. electric motor (32) and a wire dragging motor (33);

- a protection perapex carter (34).

2. A semi-automatic binder machine for the preparation of flowers provided with a support for the forming of decorations
according to claim 1, characterized in a motor (32) in d.c.
that makes rotate only the shell (14) and stops after each
cycle, the starting and stopping speed being controlled.

3. A semi-automatic binder machine for the preparation of flowers provided with a support for the forming of decorations according to claim 1, characterized in binder shell (14) which keeping still the flower and the relating support, or any other object to be tied, allows, by means of the rota - tion of the same, the winding up and the stretching of the wire onto the same.

4. A semi-automatic binder machine for the preparation of flowers provided with a support for the forming of decorations according to claim 1, characterized in the cycle starting device (3) whereby the starting of the binding cycle is determined by the workman with the same hand holding the flower.

5. A semi-automatic binder machine for the preparation of flowers provided with a support for the forming of decorations according to claim 1, characterized in the wire guide (5) movable in two halves with electromagnet (6) that will disengage the wire (1) after the cut by opening the guide, allowing said wire to rotate around shell (14).

6. A semi-autoamtic binder machine for the preparation of flow-wers provided with a support for the forming of decroations according to claim 1, characterized in opposed wire dragging rollers (8) that, separated from electromagnet (31), make wire (1) advance through shear (7) and along the movable, closed guide, until it pierces the calyx of the flower and which, due to the particular inclination of feeding guide (5)

- 4 -

allow the automatic folding of the part of wire onto the stem of the flower during winding.

7. A semi-automatic binder machine for the preparation of flowers provided with a support for the forming of decorations according to claim 1, characterized in the wire guide collar (2) that allows the determination and adjusting of the winding pitch by means of the speed regulation of said collar.

8. A semi-automatic binder machine for the preparation of flowers provided with a support for the forming of decorations according to claim 1, characterized in the rotation mechanism and phase disposition of binder shell (22) to a new working cycle.

**FIG·1**

**FIG·2**

0 189 006

FIG.3

FIG.4

0 189 006

2/3

FIG.5

28

14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 658 296 (ANDERSEN)<br>* Column 3, line 12 - column 4, line 68; column 6, line 20 - column 7, line 37; figures 1-9; claims 1-4 * | 1,6 | A 01 G 5/02<br>A 41 G 1/02 |
| A | US-A-2 658 536 (ANDERSEN)<br>* Column 5, lines 30-55; claims 1-4; figures 1-9 * | 1,3,4 | |
| A | US-A-1 721 157 (KUHLMANN)<br>* Page 1, line 105 - page 2, line 33; claims 1,4-6 * | 1,3 | |
| A | DE-B-2 311 200 (HOCHWALD)<br>* Column 4, line 43 - column 5, line 7; claims 1,10,14; figures 1,8 * | 1-3,7 | |

TECHNICAL FIELDS
SEARCHED (Int. Cl.4)

A 01 G
A 41 G

The present search report has been drawn up for all claims

| Place of search | Date of completion of the search | Examiner |
|---|---|---|
| THE HAGUE | 10-09-1985 | MEINDERS H. |